# EUROPEAN PATENT SPECIFICATION

(11) **EP 2 971 242 B1**
(45) Date of publication and mention of the grant of the patent: **13.05.2020**
(21) Application number: 13878309.7
(22) Date of filing: 30.12.2013
(51) Int. Cl.: C23C 4/08, C23C 4/18, C23C 4/12, C23C 28/00, C08G 77/20, C23C 18/12, C09D 183/04

(54) **CORROSION PROTECTION MATERIAL AND METHOD FOR PROTECTING ALUMINUM COATINGS**
KORROSIONSSCHUTZMATERIAL UND VERFAHREN ZUM SCHUTZ VON ALUMINIUMBESCHICHTUNGEN
MATIÈRE DE PROTECTION CONTRE LA CORROSION ET PROCÉDÉ DE PROTECTION DE REVÊTEMENTS D'ALUMINIUM

(30) Priority: 14.03.2013 US 201361781593 P
(43) Date of publication of application: 20.01.2016
(73) Proprietor: United Technologies Corporation, Farmington, CT 06032 (US)
(72) Inventor: STROCK, Christopher, W., Kennebunk, Maine 04043 (US)
(74) Representative: Dehns
(86) International application number: PCT/US2013/078184
(87) International publication number: WO 2014/143362

(56) References cited:
- EP-A1- 1 428 902
- EP-B1- 1 907 494
- WO-A2-02/061173
- JP-A- 2004 197 151
- JP-A- 2009 263 739
- JP-A- 2010 018 838
- US-A- 2 845 366
- US-A1- 2001 007 696
- US-A1- 2003 012 971
- US-A1- 2006 292 345
- US-A1- 2007 048 537
- US-A1- 2008 113 188
- US-A1- 2010 139 522

## Description

### BACKGROUND

The present disclosure is directed to an ormosil suspension which can be used to protect against corrosion in a porous aluminum coating and to a method for applying an ormosil (organically modified silicate) suspension to the porous aluminum coating.

Porous aluminum coatings are used for a wide variety of purposes. For example, abradable aluminum based coatings are applied to a casing surrounding a compressor section of a gas turbine engine. Due to the porosity of the aluminum coating and the environment in which the aluminum coating operates, internal corrosion can be significant. When present, the internal corrosion can weaken the coating and make it susceptible to fatigue cracking and spallation. The internal corrosion may be detected via white corrosion product on the surface of the coating and areas of coating swelling, lifting and flaking at mid thickness.

JP 2004 197151 discloses a method for manufacturing corrosion-resistance iron having high rust preventiveness and durability without using or containing harmful chromium compounds.

JP 2009263739 discloses electric corrosion protection of a reinforced concrete structure configured to increase adhesion force of the thermal spraying metal adhering to the surface of the concrete structure in a anodic protection system configured to improve the durability of the thermal spraying material.

US 2845366 discloses a method of coating a ferrous metal object with aluminum comprising clearing and roughening the surface, spraying a coating of liquified aluminum, displacing air from contact with the coated surface and covering the surface with a oxygen-free inert gas. The object is then heated above the melting point of aluminum to fuse the coating to the surface of the object.

JP 2010018838 discloses a method of inexpensively and sufficiently performing corrosion prevention of a complicated part of a steel structure on which mill coating is impossible.

EP 1428902 discloses a thermal barrier coating for an underlying metal substrate of articles that operate at, or are exposed to high temperatures as well as being exposed to environmental contaminant compositions

WO 02/061173 discloses an ormosil composite that provides good corrosion and abrasion resistance of the underlying substrate.

US 2006/292345 discloses a surface that is at least hydrophobic that is formed from a mixture that comprises a sol-gel that comprises an alkoxosilane precursor.

US 2007/048537 A1 discloses the sealing of cracks in thermally sprayed metals, such as aluminium, using sol-gel solutions containing organosilane compounds.

### SUMMARY

In accordance with the present disclosure, there is provided a method for protecting porous aluminum coatings comprising the steps of: providing an ormosil suspension; infiltrating the porous aluminum coating with the ormosil suspension; and drying said infiltrated ormosil suspension to leave a solid film on aluminum surfaces within said porous aluminum coating, wherein the ormosil suspension contains tetraethylorthosilicate, vinyltrimethoxysilane, 3-(trimethoxysilyl) propylmethacrylate, and hexyltrimethoxysilane.

In another and alternative embodiment, the ormosil suspension providing step comprises providing an ormosil suspension containing 11.2 ml tetraethylorthosilicate, 15.2 ml vinyltrimethoxysilane, 4.0 ml 3-(trimethoxysilyl) propylmethacrylate, and at least 10.7 vol% hexyltrimethoxysilane.

In another and alternative embodiment, the infiltrating step comprising wicking the ormosil suspension into cracks and gaps within the porous aluminum coating.

In another and alternative embodiment, the infiltrating step comprises using vacuum assisted infiltration to cause the ormosil suspension to penetrate the porous aluminum coating.

In another and alternative embodiment, the infiltrating step comprises using pressure assisted infiltration to cause the ormosil suspension to penetrate the porous aluminum coating.

In another and alternative embodiment, the method further comprises forming a solid film having a thickness in the range of from 2.0 to 15 microns on aluminum surfaces within the porous aluminum coating.

Further in accordance with the present disclosure, there is provided an ormosil suspension for providing corrosion resistance to a porous based aluminum coating, said ormosil suspension containing tetraethylorthosilicate, vinyltrimethoxysilane, 3-(trimethoxysilyl) propylmethacrylate, hexyltrimethoxysilane, and a solvent.

In another and alternative embodiment, the solvent is selected from the group consisting of alcohol and water.

Still further in accordance with the present disclosure, there is provided a porous aluminum coating having aluminum surfaces within the coating and a solid film on the aluminum surfaces, said solid film having a thickness in the range of from 2.0 to 15 microns, said solid film being obtained by infiltrating said porous aluminum coating with an ormosil suspension containing tetraethylorthosilicate, vinyltrimethoxysilane, 3-(trimethoxysilyl) propylmethacrylate, and hexyltrimethoxysilane, and further drying said infiltrated ormosil suspension to leave the solid film on the aluminum surfaces within said porous aluminum coating.

In another and alternative embodiment, the coating is a thermally sprayed abradable coating.

Other details of the corrosion protection material and a method for protecting aluminum coatings are set forth in the following detailed description.

### DETAILED DESCRIPTION

In accordance with the present disclosure, an organically modified silane sol-gel coating (ormosil) is used as a treatment for porous aluminum coating to help prevent aqueous corrosion within the porosity of the coating.

The porous aluminum coating may be a thermally sprayed, abradable aluminum based coating which has been applied to a substrate formed from a metal alloy, such as a titanium alloy, a nickel alloy, or an iron alloy. For example, the coating could be formed from an aluminum/silicon material. The structure of the thermally sprayed aluminum based coating typically includes internal narrow cracks and gaps.

In accordance with the present disclosure, the ormosil sol-gel coating contains tetraethylorthosilicate, vinyltrimethoxysilane, 3-(trimethoxysilyl) propylmethacrylate, hexyltrimethoxysilane, and a solvent. The solvent may be selected from the group consisting of alcohol and water. In one non-limiting embodiment, the ormosil suspension used to form the coating consists of 11.2 ml tetraethylorthosilicate, 15.2 ml vinyltrimethoxysilane, 4.0 ml 3-(trimethoxysilyl) propylmethacrylate, at least 10.7 vol% hexyltrimethoxysilane, and the balance the solvent.

Once the ormosil suspension has been prepared, it is infiltrated into the porous aluminum coating. The infiltration step may be wicking the ormosil suspension into the narrow cracks and gaps within the thermal sprayed aluminum coating structure. Alternatively, the infiltration step may be vacuum or pressure assisted infiltration of the ormosil suspension into the aforesaid cracks and gaps within the aluminum coating structure.

After infiltration, the solvent is evaporated off using any suitable drying technique. Once the solvent has evaporated off, there is a solid film left on the aluminum surfaces within the aluminum coating. The solid film has a thickness of from 2.0 microns to 15 microns in thickness.

The method described herein provides an improved resistance to cracking and hydrophobic characteristics that help protect the aluminum surfaces and reduce the wicking of water into the coating. This helps to improve coating durability. The abradability of the coating is substantially conserved due to the small thickness of the surface treatment. Additionally, the mechanical properties of the aluminum coating are preserved and corrosion resistance is provided.

There has been provided a corrosion protection material and a method for protecting aluminum coatings. While the corrosion protection material and the method for protecting aluminum coatings have been disclosed in the context of specific embodiments thereof, other unforeseen alternatives, modifications, and variations may become apparent to those skilled in the art having read the foregoing description. Accordingly, it is intended to embrace those alternatives, modifications, and variations as fall within the broad scope of the appended claims.

## Claims

1. A method for protecting porous aluminum coatings comprising the steps of:
providing an ormosil suspension; and
infiltrating said porous aluminum coating with said orsomil suspension, and
drying said infiltrated ormosil suspension to leave a solid film on aluminum surfaces within said porous aluminum coating,
**characterized in that** said ormosil suspension contains tetraethylorthosilicate, vinyltrimethoxysilane, 3-(trimethoxysilyl) propylmethacrylate, and hexyltrimethoxysilane.

2. The method of claim 1, wherein said ormosil suspension contains 11.2 ml tetraethylorthosilicate, 15.2 ml vinyltrimethoxysilane, 4.0 ml 3-(trimethoxysilyl) propylmethacrylate, and at least 10.7 vol% hexyltrimethoxysilane.

3. The method of claim 1, wherein said infiltrating step comprising wicking said ormosil suspension into cracks and gaps within the porous aluminum coating.

4. The method of claim 1, wherein said infiltrating step comprises using vacuum assisted infiltration to cause said ormosil suspension to penetrate the porous aluminum coating.

5. The method of claim 1, wherein said infiltrating step comprises using pressure assisted infiltration to cause said ormosil suspension to penetrate the porous aluminum coating.

6. The method of claim 1, wherein the solid film has a thickness in the range of from 2.0 to 15 microns.

7. A porous aluminum coating having aluminum surfaces within the coating and a solid film on the aluminum surfaces, said solid film having a thickness in the range of from 2.0 to 15 microns, said solid film being obtained by infiltrating said porous aluminum coating with an ormosil suspension containing tetraethylorthosilicate, vinyltrimethoxysilane, 3-(trimethoxysilyl) propylmethacrylate, and hexyltrimethoxysilane,
and further drying said infiltrated ormosil suspension to leave the solid film on the aluminum surfaces within said porous aluminum coating.

8. The porous aluminum coating of claim 7, wherein said coating is a thermally sprayed abradable coating.

## Patentansprüche

1. Verfahren zum Schutz von porösen Aluminiumbeschichtungen, wobei das Verfahren die folgenden Schritte umfasst:
Bereitstellen einer Ormosil-Lösung; und
Infiltrieren der porösen Aluminiumbeschichtung mit der Ormosil-Lösung, und
Trocknen der infiltrierten Ormosil-Lösung, um einen festen Film auf Aluminiumflächen in der porösen Aluminiumbeschichtung zu hinterlassen,
**dadurch gekennzeichnet, dass** die Ormosil-Lösung Tetraethylorthosilikat, Vinyltrimethoxysilan, 3-(Trimethoxysilyl)propylmethacrylat und Hexyltrimethoxysilan enthält.

2. Verfahren nach Anspruch 1, wobei die Ormosil-Lösung 11,2 ml Tetraethylorthosilikat, 15,2 ml Vinyltrimethoxysilan, 4,0 ml 3-(Trimethoxysilyl)propylmethacrylat und mindestens 10,7 Vol.-% Hexyltrimethoxysilan enthält.

3. Verfahren nach Anspruch 1, wobei der Schritt des Infiltrierens ein Abtransportieren der Ormosil-Lösung in Risse und Spalten in der porösen Aluminium-Beschichtung umfasst.

4. Verfahren nach Anspruch 1, wobei der Schritt des Infiltrierens ein Verwenden einer vakuumgestützten Infiltration umfasst, um zu veranlassen, dass die Ormosil-Lösung die poröse Aluminiumbeschichtung penetriert.

5. Verfahren nach Anspruch 1, wobei der Schritt des Infiltrierens ein Verwenden einer druckgestützten Infiltration umfasst, um zu veranlassen, dass die Ormosil-Lösung die poröse Aluminiumbeschichtung penetriert.

6. Verfahren nach Anspruch 1, wobei der feste Film eine Dicke zwischen 2,0 und 15 Mikrometern aufweist.

7. Poröse Aluminiumbeschichtung, die Aluminiumflächen in der Beschichtung und einen festen Film auf den Aluminiumflächen aufweist, wobei der feste Film eine Dicke zwischen 2,0 und 15 Mikrometern aufweist, wobei des feste Film durch Infiltrieren der porösen Aluminiumbeschichtung mit einer Ormosil-Lösung erhalten wird, die Tetraethylorthosilikat, Vinyltrimethoxysilan, 3-(Trimethoxysilyl)propylmethacrylat und Hexyltrimethoxysilan enthält,
und wobei ferner ein Trocknen der infiltrierten Ormosil-Lösung den festen Film auf den Aluminiumflächen in der porösen Aluminiumbeschichtung hinterlässt.

8. Poröse Aluminiumbeschichtung nach Anspruch 7, wobei die Beschichtung eine thermisch gespritzte zerreibbare Beschichtung ist.

## Revendications

1. Procédé de protection de revêtements d'aluminium poreux comprenant les étapes :
de fourniture d'une suspension d'ormosil ; et
d'infiltration dudit revêtement d'aluminium poreux avec ladite suspension d'ormosil, et
de séchage de ladite suspension d'ormosil infiltrée pour laisser un film solide sur des surfaces d'aluminium à l'intérieur dudit revêtement d'aluminium poreux,
**caractérisé en ce que** ladite suspension d'ormosil contient du tétraéthylorthosilicate, du vinyltriméthoxysilane, du 3-(triméthoxysilyl)propylméthacrylate, et de l'hexyltriméthoxysilane.

2. Procédé selon la revendication 1, dans lequel ladite suspension d'ormosil contient 11,2 ml de tétraéthylorthosilicate, 15,2 ml de vinyltriméthoxysilane, 4,0 ml de 3-(triméthoxysilyl)propylméthacrylate et au moins 10,7 % en volume d'hexyltriméthoxysilane.

3. Procédé selon la revendication 1, dans lequel ladite étape d'infiltration comprend le drainage de ladite suspension d'ormosil dans des fissures et des espaces à l'intérieur du revêtement d'aluminium poreux.

4. Procédé selon la revendication 1, dans lequel ladite étape d'infiltration comprend l'utilisation d'une infiltration assistée par dépression pour amener ladite suspension d'ormosil à pénétrer dans le revêtement d'aluminium poreux.

5. Procédé selon la revendication 1, dans lequel ladite étape d'infiltration comprend l'utilisation d'une infiltration assistée par pression pour amener ladite suspension d'ormosil à pénétrer dans le revêtement d'aluminium poreux.

6. Procédé selon la revendication 1, dans lequel le film solide a une épaisseur comprise dans la plage allant de 2,0 à 15 microns.

7. Revêtement d'aluminium poreux ayant des surfaces d'aluminium à l'intérieur du revêtement et un film solde sur les surfaces d'aluminium, ledit film solide ayant une épaisseur comprise dans la plage allant de 2,0 à 15 microns, ledit film solide étant obtenu par l'infiltration dudit revêtement d'aluminium poreux avec une suspension d'ormosil contenant du tétraéthylorthosilicate, du vinyltriméthoxysilane, du 3-(triméthoxysilyl)propylméthacrylate, et de l'hexyltriméthoxysilane,
et le séchage en outre de ladite suspension d'ormosil infiltrée pour laisser le film solide sur les surfaces d'aluminium à l'intérieur du revêtement d'aluminium poreux.

8. Revêtement d'aluminium poreux selon la revendication 7, dans lequel ledit revêtement est un revêtement abradable thermiquement pulvérisé.
